Europäisches Patentamt

European Patent Office

Office européen des brevets

(11) Veröffentlichungsnummer: **0 221 510**
**A2**

# (12) EUROPÄISCHE PATENTANMELDUNG

(21) Anmeldenummer: 86115038.1

(22) Anmeldetag: 29.10.86

(51) Int. Cl.⁴: **B23C 3/00**

(30) Priorität: 29.10.85 DE 3538345

(43) Veröffentlichungstag der Anmeldung:
13.05.87 Patentblatt 87/20

(84) Benannte Vertragsstaaten:
AT FR GB IT SE

(71) Anmelder: Dr.techn.Ernst Linsinger & Co.
Gesellschaft m.b.H.

A-4662 Steyrermühl(AT)

(72) Erfinder: Pomikacsek, Josef, Dipl.-Ing.
Esplanade 27
A-4810 Gmunden(AT)

(74) Vertreter: Hafner, Dieter, Dr.rer.nat.,
Dipl.-Phys.
Ostendstrasse 132
D-8500 Nürnberg 30(DE)

(54) Verfahren und Vorrichtung zur Bearbeitung der Laufflächen von Eisenbahnschienen durch Fräsen.

(57) Zum zerspanenden Bearbeiten der Laufflächen von Schienen I wird eine stationäre Anlage verwendet, welche zur Erzielung von hohen Zerspanleistungen neben guter Oberflächengüte einen rotierenden innen verzahnten Fräskranz 2 verwendet, dessen Flugkreis das normalerweise elliptische Laufflächenprofil der Schiene I in einer zur Schienenlängsachse geneigten Position erzeugt.

Zur Vermeidung der Übertragung der Riffelfehler I8 der Lauffläche wird im Bearbeitungsbereich mindestens eine solche kegelige Auflagerolle I7 verwendet, deren elliptischer Kontaktbogen mit wesentlich größerem Krümmungsradius ausgelegt ist als die Amplitudenlänge der Riffeln.

FIG 4

EP 0 221 510 A2

**"Verfahren und Vorrichtung zur Bearbeitung der Laufflächen von Eisenbahnschienen durch Fräsen"**

Die Erfindung betrifft ein Verfahren und eine Vorrichtung zur Bearbeitung der Laufflächen von Eisenbahnschienen durch Fräsen, wobei die Schienen an einer ortsfesten Fräseinheit, durch seitlich angeordnete Rollen geführt, in Längsrichtung vorbei bewegt werden.

Oft wird die Forderung gestellt, daß die Laufflächen von Schienen bearbeitet werden müssen. In dem Sinne kann es sich im wesentlichen um zwei Applikationsarten handeln, wie:
-Verbesserung der Oberflächengüte bei neuen Schienen, z. B. für Hochgeschwindigkeitsstrecken, wo die gewalzte Qualität nicht ausreichend ist.
-Reprofilierung gebrauchter Schienen.

Die gebrauchten Schienenlaufflächen weisen zwei durch plastische Deformation entstandene Fehler auf, nämlich Verformung des Laufflächenquerschnittes und Entstehung von Riffeln in Längsrichtung.

Beide Fehler erhöhen den Fahrtwiderstand der Strecke, wobei die Riffeln eine schwerwiegende Rolle spielen. Sie treten zusammen mit Rissen auf und haben eine selbstinduzierende Wirkung, welche nach der ersten Entstehung der Riffeln in verhältnismäßig kurzer Zeit zu Schienenbrüchen führen kann.

Zur Bearbeitung der Laufflächen werden unterschiedliche Zerspantechniken verwendet, wie Hobeln, Schleifen und Fräsen.

Das Hobeln ist üblicherweise mit hohen Anlage-und Werkzeugkosten verbunden; außerdem besitzt es eine ungünstige zerspantechnologische Auswirkung, nämlich die Entstehung von nicht unterbrochenem Span, welcher durch Aufbauschneiden die Oberflächengüte negativ beeinflußt.

Beim Schleifen kann eine entsprechende Oberflächengüte erreicht werden, jedoch können - prozeßbedingt -nur geringe Bearbeitungstiefen erzielt werden. Das bereitet vor allem bei der Bearbeitung von solchen gebrauchten Schienen Zeitaufwandsprobleme, wo die Bearbeitung mindestens bis zur Tiefe der Risse vorgenommen werden muß. Versuchsergebnisse weisen darauf hin, daß die Eliminierung der Riffeln durch die Abarbeitung bis zur Tiefe der unteren Flanken, nach kurzer Gebrauchszeit zur Wiederentstehung der Riffeln führt. Darum ist es wünschenswert, daß die Reprofilierung mindestens bis zur Tiefe der Risse vorgenommen wird. Es handelt sich um Tiefen bis zu 2 mm, wobei wegen der Größenordnung des Zerspanvolumens das Fräsen als ein gut geeignetes Verfahren bezeichnet werden kann.

In bisher bekannten Vorrichtungen wurden mit vertikalen oder horizontalen Achsen angeordnete Profilfräser verwendet, welche das Profil entweder mit mehreren tangential angeordneten Spuren oder mit Profilschneiden erzeugen. In beiden Fällen entstehen hohe Werkzeugkosten und durch maßliche oder Positionierungs-Ungenauigkeiten der einzelnen Schneiden treten oft Probleme auf mit der Güte und Profilgenauigkeit der bearbeiteten Fläche.

Der Erfindung liegt die Aufgabe zugrunde, zur Bearbeitung der Laufflächen von Eisenbahnschienen ein verbessertes Fräsverfahren zu - schaffen, welches neben niedrigen Werkzeug-und Betriebskosten die Bearbeitung der Schienenlauffläche bis zu ca. 2 mm Tiefe bei guter Oberflächenqualität und Produktivität ermöglicht. Ferner soll durch die Erfindung eine Fräsvorrichtung zur Durchführung des Verfahrens geschaffen werden.

Diese Aufgabe wird nach der Erfindung bei einem Verfahren der eingangs erläuterten Art im wesentlichen dadurch gelöst, daß in der Fräseinheit ein Fräswerkzeug mit einem rotierenden Fräskranz mit innen angeordneten Schneidelementen verwendet wird und der Schneidenflugkreis des Fräswerkzeuges zur Schiene so ausgerichtet wird, daß ein Durchmesser mit einer Schienenprofil-Symmetrieachse zusammenfällt und die Schneidenflugkreisebene derart schräg zur Schienenlängsachse verläuft, daß die Projektion des Schneidenflugkreises in die die Schienenprofil-Symmetrieachse enthaltene Schienenprofilebene eine Ellipse ergibt, deren Verlauf dem quasi-elliptischen Laufflächenprofil entspricht.

Nach einer vorteilhaften Weiterbildung der Erfindung wird ein Fräskranz verwendet, dessen Schneidenflugkreisradius mit der halben Länge der längeren Ellipsenachse der das Schienenprofil kennzeichnenden Ellipse übereinstimmt.

Zur Durchführung dieses Verfahrens wird erfindungsgemäß eine Vorrichtung vorgeschlagen, bei der die Fräseinheit einen rotierenden Fräskranz mit innen angeordneten Schneidelementen aufweist, dessen Schneidenflugkreisebene in Richtung der Schienenlängsachse so geneigt ist, daß die projizierte Abbildung des Schneidenflugkreises in der Schienenquerschnittsebene das jeweilige Laufflächenprofil ergibt.

Bei dieser Vorrichtung ist es besonders zweckmäßig, wenn der Radius des Schneidenflugkreises des Fräskranzes der halben Länge der längeren Ellipsenachse der das Schienenprofil kennzeichnenden Ellipse entspricht.

Weiterhin ist in vorteilhafter Weise der Neigungswinkel der Schneidenflugkreisebene des Fräskranzes verstellbar und fixierbar.

Zur Erreichung von hohen Vorschubgeschwindigkeiten neben guter Oberflächenqualität und guten Schneidenstandzeiten ist es ferner vorteilhaft, wenn die Bearbeitung der Schienenoberfläche mit einer Vorrichtung erfolgt, bei der der Fräskranz mit groß dimensionierten kreisförmigen Schneidplatten bestückt ist.

Zum Verhindern der Übertragung der Riffelfehler der Lauffläche und zur Berücksichtigung der Riffelung ist in vorteilhafter Weise nahe der Bearbeitungsstelle der in Richtung der Längsachse bewegten Schienen mindestens eine kegelige Auflagerolle vorgesehen, auf deren Kegelmantel als Positionierungsbasis die Lauffläche der Schiene von deren Fußseite durch Anpreßrollen angedrückt ist.

Hierbei ist es insbesondere vorteilhaft, wenn der Krümmungsradius des elliptischen Kontaktbogens der kegeligen Auflagerolle wesentlich größer ausgelegt ist als die Amplitudenlänge der Riffelfehler der Laufflächen der Schienen.

Einzelheiten, Merkmale und Vorteile der Erfindung werden anhand der Zeichnung im Rahmen von Ausführungsbeispielen näher erläutert.

Dabei zeigt:

Fig. I schematisch eine Darstellung der Geometrie einer Schienenlauffläche;

Fig. 2 eine Anordnung des Flugkreises eines innen verzahnten Fräskranzes bei der Bearbeitung einer Lauffläche einer Schiene;

Fig. 3 eine prinzipielle Auslegung einer Fräseinheit zum Bearbeiten der Laufflächen von Schienen mit einem rotierenden Fräskranz, dessen Schneiden innen angeordnet sind; und

Fig. 4 eine prinzipielle Ausbildung einer stationären Fräsanlage zum Bearbeiten der Laufflächen von Schienen.

Gemäß Fig.I sind die Laufflächen der Schienen I üblicherweise mit drei unterschiedlichen Radien, wie R I, R 2 und R 3 zur Mittelachse symmetrisch profiliert. Davon bereitet die Bearbeitungsgenauigkeit des Bereiches B mit dem herkömmlichen Profilfräsverfahren oft Probleme. In Bezug auf R I und R 2 handelt es sich um große Radien, wobei in Abhängigkeit vom Schienentyp der größte Radius R 2 die Größe von 300 mm erreichen kann. Erfindungsgemäß wird die Bearbeitung der Schienenlauffläche im Bereich B, welche durch R I und R 2 bestimmt ist, mit einem rotierenden Fräskranz 2 durchgeführt, dessen Schneiden innen angeordnet sind.

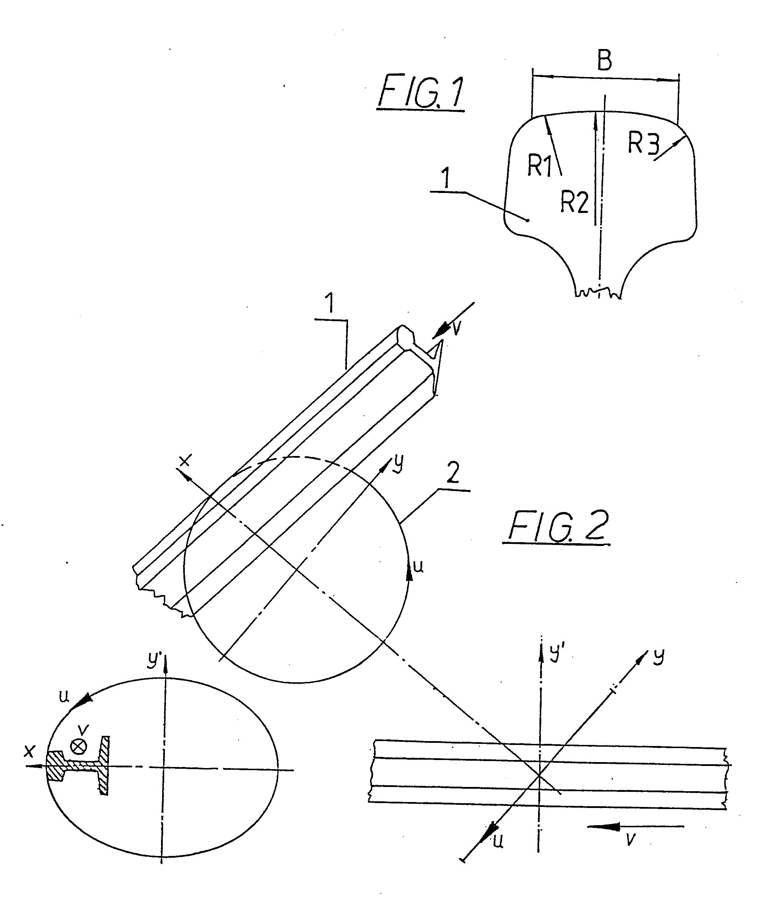

Die Fig. 2 zeigt die erfindungsgemäße axiometrische Anordnung des Flugkreises eines rotierenden, innen verzahnten Fräskranzes 2 beim Bearbeiten der Lauffläche einer Schiene I. Die X-Achse des Flugkreises U des Fräskranzes 2 ist in der Symmetrieebene der Schiene I angeordnet. Die Y-Achse ist in Richtung V der Längsachse der Schiene I so geneigt, daß die in der Normalebene des Schienenquerschnittes gelegene Projektion Y' des Flugkreises U eine solche Ellipse ergibt, welche dem Laufflächenprofil entspricht. In diesem Zusammenhang wird der durch R I und R 2 bestimmte, in Fig. I dargestellte, in der Y-Ebene gelegene Laufflächenbogen als quasi-elliptisch behandelt. Daraus ergibt sich, daß durch das um die X-Achse erfolgte Schwenken des Ellipsenbogens in einer bestimmten Ebene ein projizierter Kreisbogen entsteht, welcher in der durch die X-und Y-Achse bestimmten Ebene liegt. Der Radius und die Zustellposition des Fräskranzes wird entsprechend dieses Kreisbogens ausgelegt.

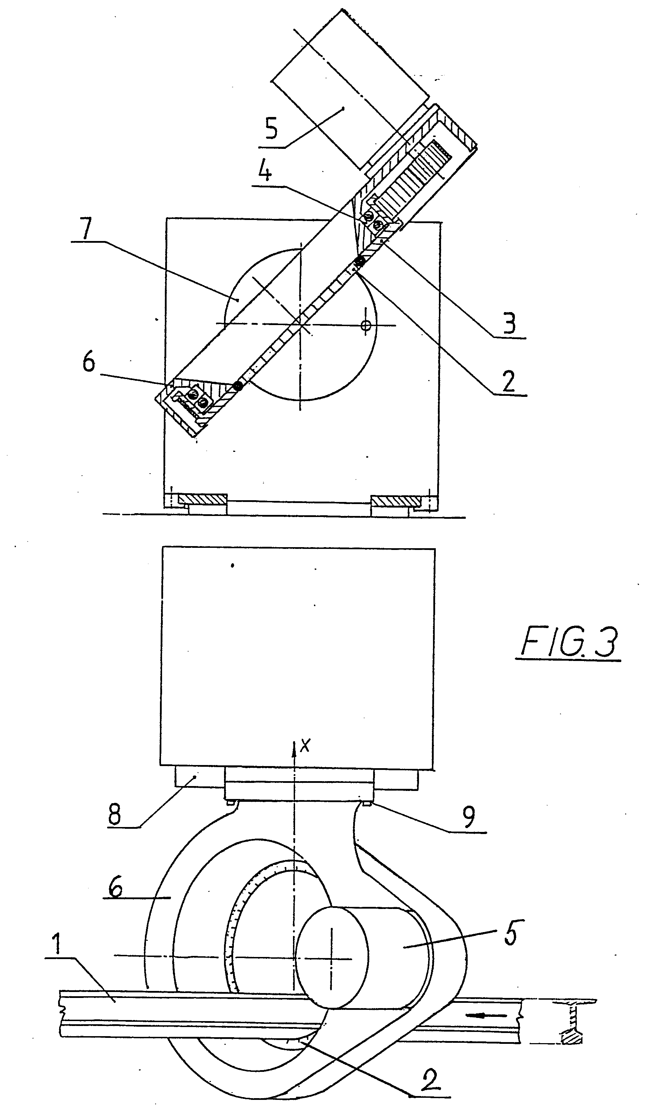

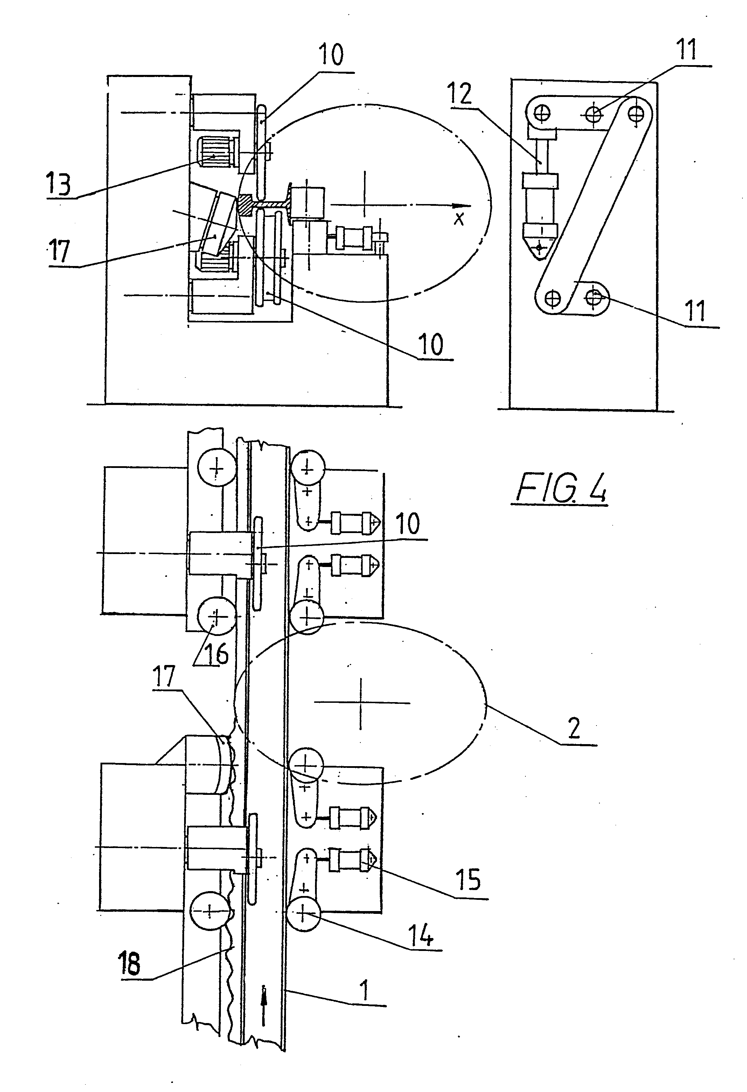

Fig.3 zeigt die prinzipielle Ausbildung einer Fräseinheit zum Bearbeiten der Laufflächen von Schienen mit einem rotierenden Fräskranz 2, dessen Schneiden innen angeordnet sind. Der Fräskranz 2 ist auf einen Rotor 3 aufgebaut, dessen Position zu einem Stator 6 durch zur radialen und axialen Positionierung geeignete Lager 4 bestimmt ist. Der Rotor 3 ist durch einem Motor 5 angetrieben. Die Schiene I ist mit ihrer Längsachse vorzugsweise horizontal beweglich angeordnet, so daß deren Symmetrieachse in der X-Achse des Fräskranzes 2 liegt. Die Ebene des Fräskranzes 2 kann durch das in der X-Achse erfolgte Schwenken mittels eines Schwenksystems 7 zum Schienenprofil eingestellt werden. Die gewünschte Lage des Schwenksystems 7 kann mit einem Befestigungsglied 9 fixiert werden. Die Schiene I verfügt über eine durch einen Pfeil gezeigte Bewegungsfreiheit. In anderen Richtungen wird die Schiene mittels Rollen geführt, deren Ausführungsbeispiel in Zusammenhang mit Fig.4 erklärt wird. Die Einstellung der Bearbeitungstiefe kann mit der in der X-Achse vorgenommenen relativen Positionsänderung durchgeführt werden. Zu diesem Zweck ist der dargestellte Erfindungsgegenstand mit einer Führung 8 versehen.

Fig. 4 zeigt die prinzipielle Ausbildung einer stationären Fräsanlage zum Bearbeiten der Laufflächen von Schienen in drei Ansichten.

Der Fräskranz 2 und das Werkstück I sind zueinander entsprechend der zu Fig.3 gegebenen Erläuterung angeordnet. Als Positionierungsbasis zur Bearbeitung dient die Lauffläche. Diese wird vor und nach der Bearbeitungsstelle durch Auflagerollen I6 und I7 bestimmt. Es ist wichtig, daß die auf der Lauffläche vorhandenen Riffelfehler I8, welche in der Zeichnung in überproportionaler Größe dargestellt sind, bei der Bearbeitung nicht kopiert werden. Erfindungsgemäß wird für diesen Zweck vor dem Bearbeitungsbereich eine kegelige Auflagerolle I7 verwendet, welche zur Lauffläche der Schiene mit derem Kegelmantel angeordnet ist. Durch den elliptischen Kontaktbereich ist es möglich, daß die Kontaktstellen nur auf den oberen Spitzen der Riffeln I8 entstehen.

Zur Anpressung an die zur Bearbeitungsbasis dienenden Auflagerollen I6 und I7 werden auf den Schienenfuß wirkende Druckrollen I4 verwendet. Diese können vorzugsweise durch hydraulische Zylinder I5 betätigt werden.

Zur Positionierung der Symmetrieachse der Schiene werden Zentrierrollen I0 verwendet, welche nach dem Ausführungsbeispiel gleichzeitig auch für die Erzeugung der Vorschubbewegung der Schiene I dienen.

Die Zentrierrollen I0 werden einzeln durch Motoren I3 angetrieben. Die Abbildung zeigt ein Ausführungsbeispiel, bei dem zur symmetrischen Verstellung der Zentrierrollen I0 jeweils ein durch Hydraulikzylinder I2 betätigter Armmechanismus II verwendet wird. Es wird so ermöglicht, daß die Symmetrieachse der Schiene I immer in der Höhe der X-Achse geführt wird.

Die Erfindung ist nicht auf die dargestellten und beschriebenen Ausführungsbeispiele beschränkt, sie umfaßt auch alle fachmännischen Abwandlungen, Weiterbildungen oder Vereinfachen sowie Teil- und Unterkombinationen der beschriebenen und/oder dargestellten Merkmale und Maßnahmen.

Bezugszeichenliste

1 Schiene
2 Fräskranz
3 Rotor
4 Lager
5 Motor
6 Stator
7 Schwenksystem
8 Führung
9 Befestigungsglied
10 Zentrierrollen
11 Armmechanismus
12 Hydraulikzylinder
13 Motor
14 Druckrolle
15 Zylinder
16 Auflagerollen
17 Auflagerollen
18 Riffeln
R 1, R 2, R 3 Radien

Ansprüche

I. Verfahren zur Bearbeitung der Laufflächen von Eisenbahnschienen durch Fräsen, wobei die Schienen an einer ortsfesten Fräseinheit, durch seitlich angeordnete Rollen geführt, in Längsrichtung vorbei bewegt werden, dadurch gekennzeichnet, daß in der Fräseinheit ein Fräswerkzeug mit einem rotierenden Fräskranz mit innen angeordneten Schneidelementen verwendet wird und der Schneidenflugkreis des Fräswerkzeuges zur Schiene so ausgerichtet wird, daß ein Durchmesser mit einer Schienenprofil-Symmetrieachse zusammenfällt und die Schneidenflugkreisebene derart schräg zur Schienenlängsachse verläuft, daß die Projektion des Schneidenflugkreises in die die Schienenprofil-Symmetrieachse enthaltene Schienenprofilebene eine Ellipse ergibt, deren Verlauf dem quasi-elliptischen Laufflächenprofil entspricht.

2. Verfahren nach Anspruch I, dadurch gekennzeichnet, daß ein Fräskranz verwendet wird, dessen Schneidenflugkreisradius mit der halben Länge der längeren Ellipsenachse der das Schienenprofil kennzeichnenden Ellipse übereinstimmt.

3. Fräsvorrichtung zur Durchführung des Verfahrens nach Anspruch I oder 2, dadurch gekennzeichnet, daß die Fräseinheit einen rotierenden Fräskranz (2) mit innen angeordneten Schneidelementen aufweist, dessen Schneidenflugkreisebene in Richtung der Schienenlängsachse so geneigt ist, daß die projizierte Abbildung des Schneidenflugkreises in der Schienenquerschnittsebene das jeweilige Laufflächenprofil ergibt.

4. Vorrichtung nach Anspruch 3, dadurch gekennzeichnet, daß der Radius des Schneidenflugkreises des Fräskranzes (2) der halben Länge der längeren Ellipsenachse der das Schienenprofil kennzeichnenden Ellipse entspricht.

5. Vorrichtung nach einem der Ansprüche 3 oder 4, dadurch gekennzeichnet, daß der Neigungswinkel der Schneidenflugkreisebene des Fräskranzes (2) verstellbar und fixierbar ist.

6. Vorrichtung nach einem der Ansprüche 3 bis 5, dadurch gekennzeichnet, daß der Fräskranz (2) mit groß dimensionierten kreisförmigen Schneidplatten bestückt ist.

7. Vorrichtung nach einem der Ansprüche 3 bis 6, dadurch gekennzeichnet, daß nahe der Bearbeitungsstelle der in Richtung der Längsachse bewegten Schienen (I) mindestens

eine kegelige Auflagerolle (I7) vorgesehen ist, auf deren Kegelmantel als Positionierungsbasis die Lauffläche der Schiene (I) von deren Fußseite durch Anpreßrollen angedrückt ist.

8. Vorrichtung nach Anspruch 7, **dadurch gekennzeichnet**, daß der Krümmungsradius des elliptischen Kontakbogens der kegeligen Auflagerolle (I7) wesentlich größer ausgelegt ist als die Amplitudenlänge der Riffelfehler (I8) der Laufflächen der Schienen (I).

FIG.1

FIG.2

FIG.3

*FIG. 4*